# EUROPEAN PATENT SPECIFICATION

(11) **EP 0 921 105 B1**
(45) Date of publication and mention of the grant of the patent: **08.08.2001**
(21) Application number: 98204021.4
(22) Date of filing: 28.11.1998
(51) Int. Cl.: C03C 8/02

(54) **Bactericidal ceramic enamel and uses thereof**
Bakterizides keramisches Email und Verwendungen davon
Email céramique bactéricide et ses utilisations

(30) Priority: 02.12.1997 ES 9702506
(43) Date of publication of application: 09.06.1999
(73) Proprietor: Esmaltes, S.A., 12110 Alcora (Castellon) (ES)
(72) Inventor: Bakali Bakali, Jorge, 12110 Alçora (Castellon) (ES)
(74) Representative: Ungria Lopez, Javier

(56) References cited:
- EP-A- 0 653 161
- EP-A- 0 684 075
- PATENT ABSTRACTS OF JAPAN vol. 096, no. 008, 30 August 1996 & JP 08 100274 A (TAKARA STANDARD CO LTD), 16 April 1996

## Description

### TECHNICAL FIELD OF THE INVENTION

The present invention fits in the technical field of ceramic enamels for wall and floor coverings and the like, such as wall tiles, floor tiles, sanitary elements (sinks, bath tubs, all ceramic complements of a bathroom, etc.), etc.

More specifically, the present invention provides a new type of bactericidal ceramic enamels.

### PRIOR ART OF THE INVENTION

The Japanese firm Toto has developed a tile that has a photocatalytic layer of titanium dioxide enamel finished with a copper and silver compound. When this photocatalytic layer absorbs light, it activates the metal ions, that kill the bacteria that come in contact with the ceramic tile.

However, these tiles have variations in their tonality and effectiveness in the passing of time.

EP-A-0 684 075 seems to disclose this kind of prior\ art material.

Further examples of prior art materials are disclosed in JP-A-8 100 274 (relating to an antibacterial and mildewproofing enamel) and EP-A-0 653 161 (relating to an antibacterial mildewproof glaze composition for ceramic products).

### DETAILED DESCRIPTION

The present invention, as indicated in its title, refers to some new bactericidal ceramic enamels.

The applicant has developed a new type of ceramic enamels, unconventional up to now in the ceramic sector, that combine the development of highly desirable optical properties, such as for example, a high refraction index (lustrous material) with a bactericidal action.

Furthermore, the developed material is provided with high quality performance qualities, since it does not eventually undergo any variation of tonality or wear, as in the case of this type of product of the prior art.

The ceramic enamel of the present invention is characterized in that its composition includes a rare earth oxide, i.e. CeO₂. This makes it a material capable of electronic transfers inside of it produced by a light-matter interaction. These electronic transfers may be capable of causing a redox process on the live matter (for example, bacteria) eventually deposited on or in close contact with the enameled surface, exercising with it a bactericidal action.

The material of the present invention is characterized in that it has the following composition:

| Oxide | Percentage (% by weight) |
|---|---|
| SiO₂ | 35-55 |
| Al₂O₃ | 5-15 |
| BaO | 0-5 |
| B₂O₃ | 0-10 |
| CaO | 5-10 |
| CeO₂ | 2-10 |
| ZnO | 5-10 |
| K₂O | 0-5 |
| Na₂O | 0-5 |
| ZrO₂ | 0-5 |

The ceramic enamel of the invention is obtained by fritting or by mixing. A combination of frits and/or formulations with these characteristics has been developed within this range of composition. Each one of these enamels is applied on the tile as a base enamel, serigraphy and/or sprayed and it is baked in an industrial furnace.

The invention also relates to the use of this ceramic enamel recording to claim 3.

The absorption properties of the material of the invention have been determined by ultraviolet visible spectrophotometry using a wave length range between 800 and 200 nm (namometers).

A wide band in the range of 400 to 200 nm (ultraviolet range), which is assigned to electronic charge energy transitions, or the passing of electrons of one energy level to another, is observed in the absorption spectrum of the material of the invention. This electronic charge transfer tends to be normally produced between the fundamental level and a higher level and is associated with the light absorption in the wave lengths corresponding to the area of the next ultraviolet spectrum and the visible one.

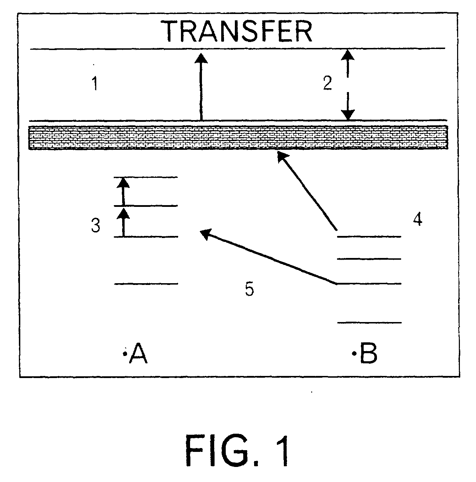

Figure 1 shows the electronic transfer in solids that affect the optical properties, indicating the energy levels for two atoms, A and B, together with some electronic states characteristic of solids.

Likewise, emission studies of the enamels of the invention have been carried out to characterize specific properties. The excitation and emission spectrums of the developed bactericidal material have been studied. The maximums of the excitation and emission spectrums are between wave lengths of 270 and 400 nm.

Likewise, the tiles coated with the enamel of the invention have been subjected to luster tests, using a Multi-Gross 268 luster gage, that measures the light reflected photoelectrically at a 20º angle, obtaining lusters in the range of 88-99 GU (GU gross units, luster units).

The studies regarding the bactericidal activity thereof have been carried out in specialized microbiology laboratories, obtaining very satisfactory results since at bacterial concentrations similar to those that may exist on the walls, there has not been any bacterial grown on the tiles coated with the enamels of the invention.

Furthermore, studies of the effect that the intensity and the type of lighting may have on the bactericidal effect have been carried out.

### BRIEF DESCRIPTION OF THE FIGURE

Sole figure 1 is an illustration of the way in which electronic transfers are produced in solids in general. The numerical references that appear in the same have the following meaning:
1.- Conduction band promotion
2.- Differences between bands (GAP).
3.- Exciting transfers d-d, f-f
4.- Valence band promotion
5.- Charge transfer

### EMBODIMENTS OF THE INVLENTION

A ceramic enamel is prepared by mixing, or obtaining a frit, from a composition that is found within the previously stated composition range. The composition range is given to adjust the material to the baking temperature in each case, due to the fact that enamels to be applied in rapid double baking cycle, in porous single baking and in stoneware single baking, have been developed.

Said frit is ground and applied as a base enamel, serigraphy and/or sprayed on the engobe and/or enameled carrier (enameled, when it is not applied as a base enamel). It is baked in an industrial furnace at the temperature and for the time characteristic of the type of ceramic carrier used, that tends to vary between 1120-1200º C and 40-80 min. for stoneware, 1100-1170º C and 30-70 min. for porous carrier and 1000-1120º C and 25-60 min. for rapid cycle.

### ABSORBENCY SPECTRUM

Band width from 400 to 200 nm. Determined with a PERKIN-ELMER, UV/VIS LAMBDA 19 model, spectrophotometer, applying the diffuse solid reflectance method.

### LUSTER INDEX

88-99 GU luster measured with a Multi-Gross 268 luster gage, with a 20º measuring angle.

### MICROBIOLOGICAL TESTS

After baking, the tiles are cut into 5 x 5 cm pieces and taken to the microbiology laboratory where they are sterilized first of all in an autoclave.

Afterwards, each tile is placed on a Petri dish and painted with a standard solution of Staphylococcus aureus at different turbidities (0.001 and 0.002 Mac Farlan turbidity). The control tiles, in other words, tiles that do not have bactericidal enamel, are also tested.

The tests are quadrupled in all cases, using four tiles with bactericidal treatment and four others without treatment.

After 12 hours of planting and being exposed to the light of 36 watt fluorescent tubes, the tiles are placed with the enameled surface in contact with sterile chocolate agar, in Petri dishes. The tile is left there for one more hour, to give time for all the live bacteria contained in the tiles to pass to the agar, where they grow.

After this experiment, bacterial growth is tested. Such grown is very scarce and non-existent in the tiles enameled with the product of the invention, while there is growth on the tiles there the material of the invention was not contained.

## Claims

1. Bactericidal ceramic enamel, characterized in that it has the following composition:
| Oxide | Percentage by weight |
|---|---|
| SiO₂ | 35-55 |
| Al₂O₃ | 5-15 |
| BaO | 0-5 |
| B₂O₃ | 0-10 |
| CaO | 5-10 |
| CeO₂ | 2-10 |
| ZnO | 5-10 |
| K₂O | 0-5 |
| Na₂O | 0-5 |
| ZrO₂ | 0-5 |

2. Enamel, according to claim 1, characterized in that it is obtained by mixing or by fritting.

3. Use of the ceramic enamel of claims 1 and 2, in the manufacture of bactericidal ceramic coverings for floors and walls.

## Patentansprüche

1. Bakterizides Keramikemail, **dadurch gekennzeichnet,** dass es die folgende Zusammensetzung hat:
| Oxide | Gew.- % |
|---|---|
| SiO₂ | 35-55 |
| Al₂O₃ | 5-15 |
| BaO | 0-5 |
| B₂O₃ | 0-10 |
| CaO | 5-10 |
| CeO₂ | 2-10 |
| ZnO | 5-10 |
| K₂O | 0-5 |
| Na₂O | 0-5 |
| ZrO₂ | 0-5 |

2. Email nach Anspruch 1, **dadurch gekennzeichnet,** dass es durch Mischen oder Fritten hergestellt wird.

3. Einsatz des Keramikemails nach den Ansprüchen 1 und 2 bei der Herstellung von bakteriziden Keramikverkleidungen für Böden und Wände.

## Revendications

1. Émail céramique bactéricide, caractérisé en ce qu'il a la composition suivante:
| Oxide | Pourcentage en masse |
|---|---|
| SiO₂ | 35-55 |
| Al₂O₃ | 5-15 |
| BaO | 0-5 |
| B₂O₃ | 0-10 |
| CaO | 5-10 |
| CeO₂ | 2-10 |
| ZnO | 5-10 |
| K₂O | 0-5 |
| Na₂O | 0-5 |
| ZrO₂ | 0-5 |

2. Émail selon la revendication 1, caractérisé en ce qu'il est obtenu par mélange ou par frittage.

3. Utilisation de l'émail céramique selon les revendications 1 et 2 dans la fabrication de revêtements céramiques bactéricides pour les sols et les murs.
